# EUROPEAN PATENT APPLICATION

(11) **EP 4 826 608 A1**
(43) Date of publication of application: **21.10.2026**
(21) Application number: 24906438.7
(22) Date of filing: 19.12.2024
(51) Int. Cl.: G06Q 10/04, G06Q 50/06

(54) **POWER PREDICTION METHOD AND SYSTEM FOR WIND FARM, AND STORAGE MEDIUM**

(30) Priority: 20.12.2023 CN 202311766432
(71) Applicant: Envision Energy Co., Ltd., Wuxi, Jiangsu 214443 (CN)
(72) Inventor: BU, Hongda, Wuxi, Jiangsu 214443 (CN); XIE, Hongliang, Wuxi, Jiangsu 214443 (CN); HU, Yijie, Wuxi, Jiangsu 214443 (CN); YAO, Bo, Wuxi, Jiangsu 214443 (CN)
(74) Representative: Balder IP Law, S.L.
(86) International application number: PCT/CN2024/140516
(87) International publication number: WO 2025/130959

(57) **Abstract**

Embodiments of the present disclosure provide a method and system for predicting power of a wind farm and a storage medium. The method includes the following. Wind turbine sites are arranged within the wind farm, a wind speed in a region where each of wind turbines is located in the wind farm is collected, and other meteorological data associated with the wind farm are collected. Airflow distribution across the wind farm is reconstructed according to collected data. Future airflow distribution across the wind farm is predicted according to the reconstructed airflow distribution across the wind farm. Turbine site points are determined, and a predicted wind speed value corresponding to each of the turbine site points is extracted from the predicted future airflow distribution. The predicted wind speed value corresponding to each of the turbine site points is converted into a predicted power value. Compared with the related technologies, the method in the present disclosure can effectively predict the power changes of the wind farm within 1-15 minutes, so as to bring significant safety and economic benefits to countries and regions having weaker power grids as well as to scenarios where the wind farm directly supply power to load sides, and can effectively position and track wind flow propagation motion trajectories without accumulating a large amount of historical data.

## Description

### CROSS REFERENCE TO RELATED APPLICATIONS

The present application claims priority to Chinese patent application No. 202311766432.9, filed December 20, 2023, which is incorporated by reference herein in its entirety.

### TECHNICAL FIELD

The various embodiments described in this document relate in general to the technical field of wind power generation, and more specifically to a method and system for predicting power of a wind farm, and a storage medium.

### BACKGROUND

Drastic changes in a wind speed can cause significant fluctuations in an output of a wind farm, thereby affecting balance of a power grid. In countries and regions where the power grid is not sufficiently robust, as well as in scenarios where the wind farm directly supplies power to load sides (such as zero-carbon industrial parks), effective prediction of power variations of the wind farm can bring substantial safety and economic benefits.

To achieve advance power prediction of the wind farm, model-based prediction methods have been proposed in related technologies. However, most power prediction methods for the wind farm are suitable for achieving power prediction of more than 15 minutes, but power prediction of more than 15 minutes could not enable timely grid adjustment, which can cause power fluctuations and affect the safety and economic benefits of the power grid.

For power prediction methods for the wind farm within 15 minutes, some of the methods are based on physical simulation models using computational fluid dynamics (CFD). In these methods, a database of wind flow and turbulence patterns is computed and generated in advance, and then wind power prediction is performed by adapting to a corresponding wind flow and turbulence pattern based on turbine sites and real-time observation data. However, such approaches involve high computational complexity, high application costs, reliance on large amounts of historical data for training, and require model matching, which is expected to be highly challenging.

In addition, there is also a method of training two models, light detection and ranging (LiDAR) is used to build a model, so as to obtain real-time wind speed information from multiple turbine sites, and carry out feedforward control of the wind turbines. Such solutions are achieved based on second-level signal data, which is used for power prediction within one minute, and relies on measured data of the LiDAR, resulting in high equipment costs.

Therefore, most existing power prediction solutions for the wind farm either rely on prediction models that require heavy computation and a large number of historical data for training, or depend on high-precision and high-cost device for measurement of wind speeds. Moreover, most of the existing solutions struggle to achieve minute-level power prediction with high accuracy.

### SUMMARY

Embodiments of the present disclosure aim to provide a method and system for predicting power of a wind farm and a storage medium, to overcome defects in the related technologies, such as a large amount of calculation, high application costs, reliance on a large amount of historical data for training, and difficulty in realizing minute-level power prediction.

Objects of the present disclosure can be achieved by following technical solutions.

In some embodiments, a method for predicting power of a wind farm is provided. The method includes the following. Wind turbine sites are arranged within the wind farm, a wind speed in a region where each of wind turbines is located in the wind farm, and other meteorological data associated with the wind farm are collected. Airflow distribution across the wind farm is reconstructed according to collected data to obtain reconstructed airflow distribution. Future airflow distribution of the wind farm is predicted according to the reconstructed airflow distribution across the wind farm to obtain predicted airflow distribution. Turbine site points are determined, and a predicted wind speed value corresponding to each of the turbine site points is extracted from the predicted airflow distribution. The predicted wind speed value corresponding to each of the turbine site points is converted into a predicted power value.

In some embodiments, reconstructing the airflow distribution across the wind farm can be achieved as follows. The wind farm is divided into grid points, where a grid spacing between the grid points is determined according to the wind turbine sites and collecting positions for the other meteorological data. A continuous image sequence of collecting points of the wind farm is formed according to historical continuous data of wind speeds and other meteorological data. The continuous image sequence of the collecting points of the wind farm is reconstructed using a pre-trained video inpainting model to obtain the reconstructed airflow distribution across the wind farm.

In some embodiments, reconstructing the continuous image sequence is achieved through one or more of the following: interpolation, image inpainting, and video inpainting.

In some embodiments, the continuous image sequence covers a time period ranging from 0 to 1 hour. The predicted airflow distribution across the wind farm covers a future time period ranging from 0 to 1 hour.

In some embodiments, the predicted airflow distribution across the wind farm covers a future time period ranging from 1 minute to 15 minutes.

In some embodiments, predicting the future airflow distribution across the wind farm uses one of an optical flow method and a neural network training method.

In some embodiments, converting the predicted wind speed value corresponding to each of the turbine site points into the predicted power value including: obtaining the predicted power value of the corresponding wind turbine by looking up a table of power curves according to the predicted wind speed value corresponding to each of the turbine site points.

In some embodiments, the wind speed collected at the corresponding wind turbine site is a measured value of an anemometer, or a current wind speed estimated by a respective wind turbine of the wind turbines according to a rotational speed, a torque, and a pitch angle of the respective wind turbine.

In some embodiments, the other meteorological data are obtained from one or more of a wind measurement tower and a meteorological station.

Embodiments of the present disclosure further provide a system for predicting power of a wind farm, including: a wind turbine site and supplementary meteorological observation module, configured to arrange wind turbine sites within the wind farm, collect a wind speed in a region where each of wind turbines in the wind farm is located and other meteorological data associated with the wind farm; an observation data fusion-wind farm airflow distribution reconstruction module, configured to reconstruct an airflow distribution across the wind farm according to collected data to obtain reconstructed airflow distribution; a future wind farm airflow distribution prediction module, configured to predict a future airflow distribution across the wind farm according to the reconstructed airflow distribution across the wind farm to obtain predicted airflow distribution; a turbine site wind speed extraction module, configured to determine turbine site points from the predicted airflow distribution, and extract a predicted wind speed value corresponding to each of the turbine site points from the predicted future airflow distribution; and a wind speed prediction to power prediction conversion module, configured to convert the predicted wind speed value corresponding to each of the turbine site points into a predicted power value.

Embodiments of the present disclosure further provide a computer-readable storage medium in which a computer program is stored, and the computer program, when executed by a processor, causes the processor to perform the method as described above.

Compared with the related technologies, embodiments of the present disclosure have at least one of the following advantages.
(1) In the present disclosure, the wind turbine sites are arranged in the wind farm and are used for collection of the wind speeds in regions where wind turbines in the wind farm are located, and other meteorological data associated with the wind farm are collected. Airflow distribution across the wind farm is reconstructed according to the wind speeds and the other meteorological data, and future airflow distribution across the wind farm is predicted according to the reconstructed airflow distribution across the wind farm. A predicted wind speed value corresponding to each of turbine site points is extracted from the future airflow distribution predicted and the predicted wind speed value corresponding to each of the turbine site points is converted into a predicted power value of a corresponding wind turbine of the wind turbines. That is, the method of the present disclosure obtains the future airflow distribution across the wind farm by means of airflow prediction, thereby predicting the power value of each of the wind turbines of the wind farm with relatively high prediction accuracy. Meanwhile, the present disclosure does not require prediction models with large computation load, high application cost and dependence on training with massive historical data, thus reducing investment cost.
(2) In the present disclosure, drastic changes in wind speeds may cause significant fluctuations in the output of the wind farm, thereby affecting balance of the power grid. By collecting the wind speeds and other meteorological data at multiple point sites in the wind farm to form continuous historical data, the airflow distribution across the wind farm is reconstructed through a video inpainting model, and the future airflow distribution across the wind farm is further predicted, so as to obtain a predicted power value of each of the wind turbines according to a corresponding predicted wind speed value. By adopting an airflow prediction manner, the method can effectively predict power changes of the wind farm within 1-15 minutes, realizing minute-level power prediction with higher real-time performance and prediction accuracy. This brings significant safety and economic benefits to countries and regions with relatively weak power grids, as well as to scenarios where the wind farm directly supplies power to load sides (such as zero-carbon industrial parks).
(3) Considering that the microscale airflow evolution mechanism is highly complex and could not be observed over a wide range, the present disclosure can effectively locate and track the propagation trajectory of wind flow based on wind turbine observations and supplementary meteorological observations.
(4) Considering that the power prediction of the wind farm requires massive historical data accumulation and thus could not be applied to newly built wind farms, the present disclosure can still achieve effective prediction based on a small amount of data even when a new wind farm lacks sufficient historical data.

### BRIEF DESCRIPTION OF THE DRAWINGS

FIG. 1 is a schematic flow chart of a method for predicting power of a wind farm provided in embodiments of the present disclosure.
FIG. 2 is a schematic structural diagram of a system for predicting power of a wind farm provided in embodiments of the present disclosure.

### DETAILED DESCRIPTION OF THE EMBODIMENTS

In order to make the purpose, technical solutions, and advantages of the embodiments of the present disclosure clearer, the technical solutions in the embodiments of the present disclosure will be clearly and completely described below in conjunction with the accompanying drawings in the embodiments of the present disclosure. Obviously, the described embodiments are some of the embodiments of the present disclosure, rather than all the embodiments. The components of embodiments of the present disclosure generally described and illustrated in the drawings herein may be arranged and designed in a variety of different configurations.

The following detailed illustration of embodiments of the disclosure provided in the accompanying drawings is not intended to limit the scope of the claimed disclosure, but merely to represent selected embodiments of the disclosure. Based on the embodiments in the present disclosure, all other embodiments obtained by those of ordinary skill in the art without making creative efforts fall within the scope of protection of the present disclosure.

It shall be noted that similar reference numerals and letters denote similar items in the following figures, and therefore, if an item is defined in one figure, it does not need to be further defined and explained in the following figures.

### Embodiment 1

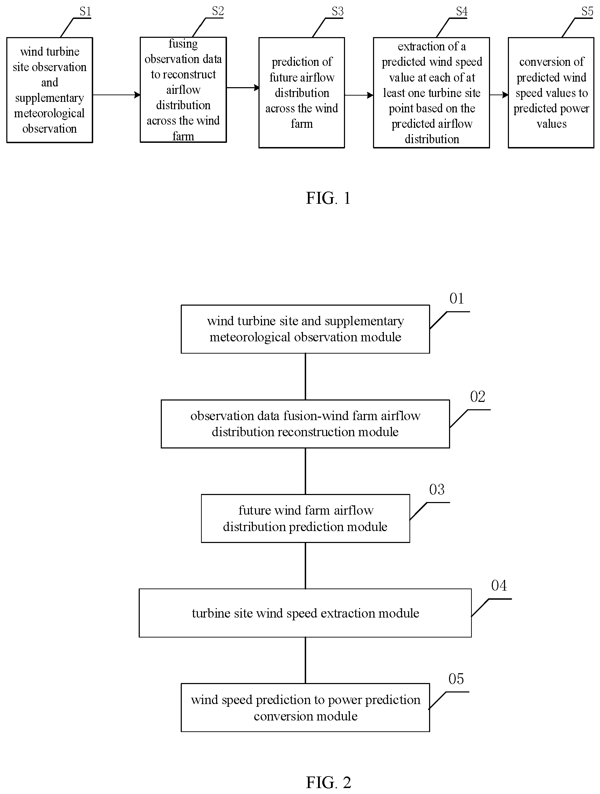

As shown in FIG. 1, embodiments of the present disclosure provide a method for predicting power of a wind farm, and the method begins at S1.

At S1, wind turbine site observation and supplementary meteorological observation: wind turbine sites are arranged within the wind farm, a wind speed in a region where each of wind turbines is located in the wind farm is collected, and other meteorological data associated with the wind farm are collected.

The collected wind speed includes but is not limited to a measured value from an anemometer, and a current wind speed estimated by a respective wind turbine according to a rotational speed, a torque, a pitch angle, and other operating state parameters of the respective wind turbine. The other meteorological data can be obtained from a wind measurement tower, a nearby meteorological station, or the like.

At S2, fusing observation data to reconstruct airflow distribution across the wind farm: airflow distribution across the wind farm is reconstructed according to collected data.

The airflow distribution across the wind farm is reconstructed as follows.

The wind farm is divided into grid points, where a grid spacing between the grid points is determined according to the wind turbine sites and collecting positions for the other meteorological data.

A continuous image sequence of collecting points of the wind farm is formed according to historical continuous data of wind speeds and other meteorological data.

A pre-trained video inpainting model is used to reconstruct the continuous image sequence of the collecting points of the wind farm, to obtain the airflow distribution across the wind farm.

It shall be noted that the historical continuous data include the wind speeds and other meteorological data, the collecting points are the grid points, and the wind turbines are wind farm wind turbines.

The reconstruction method using the video inpainting model includes, but is not limited to, one or more of interpolation, image inpainting, and video inpainting, and the like. It shall be understood that the reconstruction method refers to the method for reconstructing the continuous image sequence using the video inpainting model.

A duration of the continuous image sequence is between 0 and 1 hour, for example, 30 minutes.

For example, before processing the collected data, data cleaning is performed on the collected data.

In the embodiments of the present disclosure, operations at S2 can be conducted as follows.

After data cleaning of the collected data, the airflow distribution across the wind farm is reconstructed. The reconstruction method herein involves following operations. The wind farm is divided into the grid points. The grid spacing between the grid points depends on the wind turbine sites and manners for meteorological observation, for example, the grid spacing can be 200m or 500m. Thereafter, observation data at the wind turbine sites and supplementary meteorological observation data are filled into grids. The continuous image sequence is formed based on continuous observations over a period of time, and the period of time is between 0 and 1 hour, optionally 30 minutes. The pre-trained video inpainting model is used for reconstruction of the continuous image sequence. Before reconstruction, only the grid points corresponding to the wind turbine sites and observation points have wind speed values. After reconstruction, the airflow distribution across the whole wind farm is obtained. The reconstruction methods include but are not limited to interpolation, image inpainting, video inpainting, or the like. The video inpainting model does not require actual operation data of the wind farm, and can be obtained by training using publicly available video data or wind farm simulation airflow videos.

It will be appreciated that the above-mentioned collected data are the wind speeds in the region where each of the wind turbines is located and other meteorological data. The observation data at the wind turbine sites include the wind speeds in the region where each of the wind turbines is located collected at a corresponding wind turbine site, the supplementary meteorological observation data are other meteorological data, and each of the grids is a grid point.

At S3, prediction of future airflow distribution across the wind farm: the future airflow distribution across the wind farm is predicted according to the reconstructed airflow distribution across the wind farm.

The future airflow distribution across the wind farm is predicted for a future time period ranging from 0 to 1 hour, for example 1 to 15 minutes.

The prediction of the future airflow distribution can be achieved using an optical flow method (without data accumulation), neural network training method (with data accumulation), or the like.

It shall be understood that the neural network training method involves training a neural network model to obtain a trained neural network model and performing prediction using the trained neural network model.

That is, in this operation, based on the reconstructed airflow distribution across the wind farm, the future airflow distribution across the wind farm in the future t time is predicted, where t can range from 0 to 1 hour, for example, from 1 to 15 minutes.

At S4, extraction of a predicted wind speed value at each of turbine site points based on the predicted airflow distribution: the turbine site points are determined, and the predicted wind speed value corresponding to each of the turbine site points is extracted from the predicted future airflow distribution.

That is, based on the predicted future airflow distribution across the wind farm, a grid point corresponding to each of the wind turbine sites is determined from the grid as a turbine site point and a predicted wind speed value corresponding to each of turbine site points is determined from the predicted future airflow distribution.

It shall be understood that each of the turbine site points corresponds to one wind turbine site.

At S5, conversion of predicted wind speed values to predicted power values: the predicted wind speed value corresponding to each of the turbine site points is converted into a predicted power value by looking up a table of power curves, and the like.

### Embodiment 2

As shown in FIG. 2, embodiments of the present disclosure provide a system for predicting power of a wind farm. The system includes a wind turbine site and supplementary meteorological observation module 01, an observation data fusion-wind farm airflow distribution reconstruction module 02, a future wind farm airflow distribution prediction module 03, a turbine site wind speed extraction module 04, and a wind speed prediction to power prediction conversion module 05.

The wind turbine site and supplementary meteorological observation module 01 is configured to arrange wind turbine sites within the wind farm, collect a wind speed in a region where each of wind turbines in the wind farm is located, and collect other meteorological data associated with the wind farm.

The observation data fusion-wind farm airflow distribution reconstruction module 02 is configured to reconstruct an airflow distribution across the wind farm according to collected data.

The future wind farm airflow distribution prediction module 03 is configured to predict a future airflow distribution across the wind farm according to the reconstructed airflow distribution across the wind farm.

The turbine site wind speed extraction module 04 is configured to determine turbine site points from the predicted future airflow distribution, and extract a predicted wind speed value corresponding to each of the turbine site points from the predicted future airflow distribution.

The wind speed prediction to power prediction conversion module 05 is configured to convert the predicted wind speed value corresponding to each of the turbine site points into a predicted power value.

The above modules are relatively independent in function but are arranged in series, where each module depends on the output of its preceding module.

It shall be noted that for the specific contents and beneficial effects of the implementation process of each of the modules in the device of the present disclosure, reference can be made to the operations of the method in the above embodiments, which will not be described again herein.

It is to be noted that each of the modules involved in the embodiments of the disclosure is a logic module, and in practical application, a logic unit may be a physical unit, a part of a physical unit, or a combination of multiple physical units. Furthermore, to emphasize the innovative part of the present disclosure, this embodiment does not introduce units that are not closely related to solving the technical problem addressed by the present disclosure. However, this does not imply that no other units exist in this embodiment.

An example of an operating state of the above-described system for predicting power of the wind farm is provided below. When a strong wind passes through, data related to wind turbine site observation and meteorological observation collected by the wind turbine site and supplementary meteorological observation module 01 are normal, and returned normally. The observation data fusion-wind farm airflow distribution reconstruction module 02 operates normally in reconstructing the airflow distribution across the wind farm based on data collected over a historical time period. The propagation trajectory of the strong wind airflow is clearly visible. The future wind farm airflow distribution prediction module 03 captures and calculates the propagation airflow trajectory, correctly calculates a direction and speed of the propagation airflow trajectory, and accurately predicts the airflow distribution across the wind farm in a future period of time. The turbine site wind speed extraction module 04 determines the turbine site points to determine one or more predicted wind speed value(s). The wind speed prediction to power prediction conversion module 05 converts each of the predicted wind speed values into a power. The wind speed prediction model of the present disclosure can accurately predict that the wind speed will rise rapidly within a certain period in the future, and corresponding control measures are taken to cope with it, thereby ensuring the stable operation of the load side or the power grid side.

### Embodiment 2

Embodiments of the present disclosure provide a computer-readable storage medium in which a computer program is stored, and the computer program, when executed by a processor, causes the processor to perform the method for predicting power of the wind farm according to Embodiment 1.

Program codes for carrying out the methods of the present disclosure may be written in any combination of one or more programming languages. These program codes may be provided to a processor or controller of a general-purpose computer, special-purpose computer, or other programmable data processing apparatus such that the program code, when executed by the processor or controller, causes the functions/operations specified in the flowcharts and/or block diagrams to be implemented. The program code may be executed entirely on a machine, partially on a machine, partially on a machine and partially on a remote machine as a stand-alone software package, or entirely on a remote machine or server.

In the context of the present disclosure, a machine-readable medium may be a tangible medium that may contain or store programs for use by or in conjunction with an instruction execution system, device, or apparatus. The machine-readable medium may be a machine-readable signal medium or a machine-readable storage medium. Machine-readable media may include, but are not limited to, electronic, magnetic, optical, electromagnetic, infrared, or semiconductor systems, devices, or apparatuses, or any suitable combination of the foregoing. More specific examples of machine-readable storage media may include one or more wire-based electrical connections, portable computer disks, hard disks, random access memory (RAM), read-only memory (ROM), erasable programmable read-only memory (EPROM) or flash Memory, optical fibers, compact disc read-only memory (CD-ROM), optical storage devices, magnetic storage devices, or any suitable combination of the foregoing.

Some preferred embodiments of the present disclosure have been described in detail above. It shall be understood that a person of ordinary skill in the art can make numerous modifications and variations in accordance with the concepts of the present disclosure without creative effort. Therefore, any technical solution that can be obtained by a person skilled in the art through logical analysis, reasoning or limited experiment on the basis of the related technologies according to the concept of the present disclosure should be within the scope of protection defined by the claims.

## Claims

1. A method for predicting power of a wind farm, comprising:
collecting a wind speed in a region where each of wind turbines is located in the wind farm and other meteorological data associated with the wind farm, wherein the wind speed is collected at a corresponding wind turbine site of wind turbine sites arranged in the wind farm;
reconstructing airflow distribution across the wind farm according to wind speeds and other meteorological data to obtain reconstructed airflow distribution;
predicting future airflow distribution across the wind farm according to the reconstructed airflow distribution across the wind farm to obtain predicted airflow distribution;
determining a turbine site point of each of the wind turbine sites in the wind farm, and extracting a predicted wind speed value corresponding to each of turbine site points from the predicted airflow distribution; and
converting the predicted wind speed value corresponding to each of the turbine site points into a predicted power value of a corresponding wind turbine of the wind turbines.

2. The method of claim 1, wherein reconstructing the airflow distribution across the wind farm comprises:
dividing the wind farm into grid points, where a grid spacing between the grid points is determined according to the wind turbine sites and collecting positions for the other meteorological data;
filling the wind speed and the other meteorological data into corresponding grid points;
forming a continuous image sequence of the grid points of the wind farm according to historical continuous data of wind speeds and other meteorological data; and
reconstructing the continuous image sequence of the grid points of the wind farm using a pre-trained video inpainting model to obtain the reconstructed airflow distribution across the wind farm.

3. The method of claim 2, wherein reconstructing the continuous image sequence is achieved through one or more of the following: interpolation, image inpainting, and video inpainting.

4. The method of claim 2 or 3, wherein the continuous image sequence covers a time period ranging from 0 to 1 hour;
wherein the predicted airflow distribution covers a future time period ranging from 0 to 1 hour.

5. The method of any of claims 1 to 4, wherein the predicted airflow distribution covers a future time period ranging from 1 minute to 15 minutes.

6. The method of any of claims 1 to 5, wherein predicting the future airflow distribution across the wind farm is achieved using one of an optical flow method and a neural network training method.

7. The method of any of claims 1 to 6, wherein converting the predicted wind speed value corresponding to each of the turbine site points into the predicted power value comprises:
obtaining the predicted power value of the corresponding wind turbine by looking up a table of power curves according to the predicted wind speed value corresponding to each of the turbine site points.

8. The method of any of claims 1 to 7, wherein the wind speed collected at the corresponding wind turbine site is a measured value of an anemometer, or a current wind speed estimated by a respective wind turbine of the wind turbines according to a rotational speed, a torque, and a pitch angle of the respective wind turbine;
wherein the other meteorological data are obtained from one or more of a wind measurement tower and a meteorological station.

9. A system for predicting power of a wind farm, comprising:
a wind turbine site and supplementary meteorological observation module, configured to collect a wind speed in a region where each of wind turbines in the wind farm is located and other meteorological data associated with the wind farm, wherein the wind speed is collected at a corresponding wind turbine site of wind turbine sites arranged in the wind farm;
an observation data fusion-wind farm airflow distribution reconstruction module, configured to reconstruct airflow distribution across the wind farm according to the wind speed and the other meteorological data to obtain reconstructed airflow distribution;
a future wind farm airflow distribution prediction module, configured to predict future airflow distribution across the wind farm according to the reconstructed airflow distribution across the wind farm to obtain predicted airflow distribution;
a turbine site wind speed extraction module, configured to determine turbine site points from the predicted future airflow distribution, and extract a predicted wind speed value corresponding to each of the turbine site points from the predicted airflow distribution; and
a wind speed prediction to power prediction conversion module, configured to convert the predicted wind speed value corresponding to each of the turbine site points into a predicted power value of a corresponding wind turbine of the wind turbines in the wind farm.

10. A computer-readable storage medium in which a computer program is stored, and the computer program, when executed by a processor, causes the processor to perform the method of any one of claims 1 to 8.
